# EUROPEAN PATENT APPLICATION

(11) **EP 4 574 267 A1**
(43) Date of publication of application: **25.06.2025**
(21) Application number: 23218967.0
(22) Date of filing: 21.12.2023
(51) Int. Cl.: B04B 1/08, B04B 11/02, B01D 17/02, B01D 17/12

(54) **METHOD AND CENTRIFUGAL SEPARATION SYSTEM**

(71) Applicant: Alfa Laval Corporate AB, 221 00 Lund (SE)
(72) Inventor: BORGSTRÖM, Leonard, 135 42 Tyresö (SE)
(74) Representative: Alfa Laval Attorneys

(57) **Abstract**

The disclosure concerns a method and a centrifugal separation system (2) comprising a centrifugal separator (4). A control arrangement (12) of the system (2) is configured to: determine a pressure of a liquid heavy phase; determine a pressure of a liquid light phase; determine a flowrate of the liquid heavy phase and/or of the liquid light phase; provide a control function (58), that links a pressure difference between the liquid heavy phase and the liquid light phase with the flowrate of the liquid heavy phase or with the flowrate of the liquid light phase; and control a backpressure of the liquid heavy phase and/or a backpressure of the liquid light phase in order to adjust the pressure difference between the liquid heavy phase and the liquid light phase to the flowrate of the liquid heavy phase or the flowrate of the liquid light phase based on the control function (58).

## Description

### TECHNICAL FIELD

The invention relates to a method for controlling a separation process in a centrifugal separator and to a centrifugal separation system comprising a centrifugal separator.

### BACKGROUND

When utilising a centrifugal separator for separating a liquid-liquid mixture, such as an oil and water mixture, an efficient separation result is achieved in a centrifugal separator with limited splitting of liquid droplets at an inlet of the centrifugal separator and an adequately dimensioned disc stack arranged in a rotor of the centrifugal separator. In a mechanically hermetically sealed centrifugal separator, splitting of liquid droplets at the inlet is limited in comparison with an open inlet centrifugal separator.

Still, in difficult separation applications, such as separation of a water-oil mixture with a small density difference between the oil and the water, separation of the water-oil mixture into a heavy phase containing only water and a light phase containing mainly oil is a challenging task for a centrifugal separator. If further, the mixture ratio between water and oil is unknown and fluctuates widely, control of the separation process in the centrifugal separator is highly demanding.

In the field of bilgewater cleaning aboard marine vessels, demanding specifications/regulations define the maximum allowed oil content of bilgewater that is pumped overboard. Such specifications are set up e.g., by the International Maritime Organization (IMO) which specify that bilgewater may be discharged into the sea only if its residual oil content is below 15 ppm, and by det Norske Veritas which specify that bilgewater may be discharged into the sea only if its residual oil content is below 5 ppm.

US 2021/0402417 discloses a centrifugal separator and a method of controlling a centrifugal separator. The centrifugal separator includes a rotor delimiting therein a separation space, a hermetically sealed inlet for a liquid feed mixture, a hermetically sealed first outlet for a heavy phase, and a hermetically sealed second outlet for a light phase. The method includes separating the liquid feed mixture into at least the heavy phase and the light phase in the separation space, and determining at the first outlet that a pressure build-up period has passed.

### SUMMARY

It would be advantageous to achieve a reliable control of a separation process in a centrifugal separator. In particular, it would be desirable to enable separation of a liquid-liquid feed mixture with a largely varying ratio between the two liquids in a liquid-liquid feed mixture. To better address one or more of these concerns, one or more of a method and a separation system having the features defined in one or more of the independent claims is provided.

According to an aspect of the invention, there is provided a method for controlling a separation process in a centrifugal separator configured to separate a liquid-liquid mixture into a liquid heavy phase and a liquid light phase. The centrifugal separator comprises a rotor delimiting a separation space, an inlet for the liquid-liquid mixture leading to the separation space, a heavy phase outlet for the liquid heavy phase leading from the separation space, and a light phase outlet for the liquid light phase leading from the separation space, wherein each of the inlet, the heavy phase outlet, and the light phase outlet is mechanically hermetically sealed. The method comprises steps of:
- rotating the rotor,
- supplying a feed of the liquid-liquid mixture to the inlet,
- determining a pressure of the liquid heavy phase,
- determining a pressure of the liquid light phase,
- determining a flowrate of the liquid heavy phase and/or a flowrate of the liquid light phase,
- providing a control function, that links a pressure difference between the liquid heavy phase and the liquid light phase with the flowrate of the liquid heavy phase or with the flowrate of the liquid light phase, and
- controlling a backpressure of the liquid heavy phase and/or a backpressure of the liquid light phase in order to adjust the pressure difference between the liquid heavy phase and the liquid light phase to the flowrate of the liquid heavy phase or the flowrate of the liquid light phase based on the control function.

Since the control function is provided, which links the pressure difference between the liquid heavy and light phases with the flowrate of the liquid heavy phase or of the liquid light phase, and since, based on the control function, the backpressure of the liquid heavy phase and/or of the liquid light phase is controlled in order to adjust the pressure difference between the liquid heavy and light phases to the flowrate of the liquid heavy phase or of the liquid light phase - an outflow of the separated heavy or light phase controls the pressure difference between the separated phases. Since the flowrates of the separated heavy and light phases depend on the ratio between the light and heavy phases in the liquid-liquid mixture fed into the centrifugal separator, a control of the separation process in the centrifugal separator is achieved that is configured to follow variations in the composition of the liquid-liquid mixture.

According to a further aspect of the invention, there is provided a centrifugal separation system comprising a centrifugal separator configured to separate a liquid-liquid mixture into a liquid heavy phase and a liquid light phase. The centrifugal separator comprises: a rotor delimiting a separation space, an inlet for the liquid-liquid mixture leading to the separation space, a heavy phase outlet for the liquid heavy phase leading from the separation space, and a light phase outlet for the liquid light phase leading from the separation space, wherein each of the inlet, the heavy phase outlet, and the light phase outlet is mechanically hermetically sealed. The centrifugal separation system further comprises: a feed pump, a light phase backpressure valve, a heavy phase backpressure valve, and a control arrangement. The control arrangement comprises: a heavy phase pressure sensor, a light phase pressure sensor, a heavy phase flowrate sensor and/or a light phase flowrate sensor. The control arrangement is configured to:
- determine a pressure of the liquid heavy phase,
- determine a pressure of the liquid light phase,
- determine a flowrate of the liquid heavy phase and/or a flowrate of the liquid light phase,
- provide a control function, that links a pressure difference between the liquid heavy phase and the liquid light phase with the flowrate of the liquid heavy phase or with the flowrate of the liquid light phase, and
- control a backpressure of the liquid heavy phase and/or a backpressure of the liquid light phase in order to adjust the pressure difference between the liquid heavy phase and the liquid light phase to the flowrate of the liquid heavy phase or the flowrate of the liquid light phase based on the control function.

In a manner corresponding to the discussion of the method above, the centrifugal separation system thus, is configured to control outflow of the separated heavy and/or light phases by controlling the backpressure of one or both phases. Again, since the flowrates of the separated heavy and light phases depend on the ratio between the light and heavy phases in the liquid-liquid mixture fed into the centrifugal separator, a control of the separation process in the centrifugal separator is achieved that is configured to follow variations in the composition of the liquid-liquid mixture.

It has been realised by the inventor that controlling a separation process dynamically by providing a control function that follows the flowrate of at least one of the separated light and heavy phases ensures good separation results of a liquid-liquid mixture having an unknown ratio between the light and heavy phases and/or a ratio that fluctuates widely.

The centrifugal separator is a high-speed centrifugal separator i.e., the rotor rotates at several thousand rotations per minute, such as at 3000 - 12000 rpm, during use of the centrifugal separator.

The rotor may be arranged inside a stationary housing of the centrifugal separator. The rotor may be driven to rotate about the rotational axis by a drive arrangement comprising e.g., an electric motor.

Herein, references to axial and radial relate to the rotational axis of the rotor.

The mechanical hermetical sealing of each the inlet, the heavy phase outlet, and the light phase outlet may be achieved in a known manner. For instance, each of the inlet, the heavy phase outlet, and the light phase outlet may be sealed by a seal assembly comprising a rotatable sealing member, a stationary sealing member, and means for biasing the first and second sealing members into engagement with each other.

Herein, the liquid- liquid mixture may alternatively be referred to as the feed mixture. The liquid light phase may alternatively be referred to as the light phase and the liquid heavy phase may alternatively be referred to as the heavy phase.

During use of the centrifugal separator, separation of the liquid-liquid mixture is performed in the separation space of the centrifugal separator. A separation aid e.g., comprising a stack of frustoconical separation discs, may be arranged in the separation space.

During use of the centrifugal separator, the liquid-liquid mixture is led into the separation space along a rotational axis of the rotor. The separated liquid light phase is led out of the separation space along the rotational axis or radially close to the rotational axis. The separated liquid heavy phase is led out of the separation space along the rotational axis or radially close to the rotational axis.

Accordingly, the inlet for the liquid-liquid mixture is arranged centrally along the rotational axis at one axial end of the rotor. A first outlet of the light phase outlet and the heavy phase outlet may be arranged centrally along the rotational axis, at an opposite axial end of the rotor, and a second outlet of the light phase outlet and the heavy phase outlet may be arranged concentrically with, and at least partially around, either the inlet or the first outlet. A further alternative may be for the light phase outlet to be arranged concentrically with, and at least partially around, the inlet and for the heavy phase outlet to be arranged concentrically with, and at least partially around, the light phase outlet.

The liquid-liquid mixture may contain solids.

Accordingly, a solids-containing sludge phase may be separated from the liquid-liquid mixture in the rotor. In a known manner, the sludge phase may be discharged intermittently through outlet openings arranged at a periphery of the rotor.

The control arrangement may be a control arrangement dedicated for the control of the pressure of the liquid heavy phase and the pressure of the liquid light phase. Alternatively, the control arrangement may be configured to perform further control functions in the separation system, such as control and/or monitoring of the operation of the centrifugal separator e.g., control of the feed pump and/or of the rotation of the rotor, etc.

The centrifugal separation system comprises the heavy phase backpressure valve for controlling the pressure of the liquid heavy phase at the heavy phase outlet and the light phase backpressure valve for controlling the pressure of the liquid light phase at the light phase outlet.

The heavy phase pressure sensor may be utilised for determining the pressure of the liquid heavy phase, the light phase pressure sensor may be utilised for determining the pressure of the liquid light phase, the heavy phase flowrate sensor may be utilised for determining the flowrate of the liquid heavy phase, and/or the light phase flowrate sensor may be utilised for determining the flowrate of the liquid light phase.

The control function may be stored in the form of a data table and/or as an equation in a memory of the control arrangement.

According to embodiments, the control function, that links the pressure difference between the liquid heavy phase and the liquid light phase with the flowrate of the liquid heavy phase or with the flowrate of the liquid light phase, may be provided below a mapped relationship between a maximum pressure difference between the liquid heavy phase and the liquid light phase and the flowrate of the liquid heavy phase or the flowrate of the liquid light phase, wherein the maximum pressure difference is at a limit before liquid heavy phase leaks into the liquid light phase. In this manner, a safety margin that ensures a stable control of the separation process in the centrifugal separator may be provided. Accordingly, a desired cleanliness degree of at least one of the separated heavy phase and the separated light phase may be achieved in the separation system.

More specifically, in practical operation of the separation system with sudden and/or large fluctuations in the heavy/light phase ratio of the feed mixture, at the mapped relationship between a maximum pressure difference between the liquid heavy phase and the liquid light phase and the flowrate of the liquid heavy phase or the flowrate of the liquid light phase, wherein the maximum pressure difference is at a limit before liquid heavy phase leaks into the liquid light phase, control of the separation process is at risk of becoming instable. By providing the control function below this mapped relationship, a safety margin is created between the applied control function and potentially instable system operation.

According to embodiments, the centrifugal separator may comprise a disc stack of frustoconical separation discs arranged in the separation space, the separation discs being provided with distribution holes forming a rising channel through the disc stack, and the distribution holes being arranged closer to an inner periphery of the separation discs than an outer periphery of the separation discs. In this manner, the centrifugal separator may be of the so-called concentrator type, which is configured for providing an as clean as possible separated liquid heavy phase.

This may be advantageous in the separation of a water-oil mixture, wherein clean water is a primary goal of the separation, such as in the case of cleaning bilgewater aboard a marine vessel for overboard disposal of the cleaned bilgewater.

Further features of, and advantages with, the invention will become apparent when studying the appended claims and the following detailed description.

### BRIEF DESCRIPTION OF THE DRAWINGS

Various aspects and/or embodiments of the invention, including its particular features and advantages, will be readily understood from the example embodiments discussed in the following detailed description and the accompanying drawings, in which:
Fig. 1 schematically illustrates a centrifugal separation system,
Fig. 2 schematically illustrates a centrifugal separator,
Fig. 3 schematically illustrates a control arrangement of a centrifugal separation system,
Fig. 4 shows a diagram of a control function,
Fig. 5 illustrates a method controlling a separation process, and
Fig. 6 illustrates embodiments of a computer-readable storage medium.

### DETAILED DESCRIPTION

Aspects and/or embodiments of the invention will now be described more fully. Like numbers refer to like elements throughout. Well-known functions or constructions will not necessarily be described in detail for brevity and/or clarity.

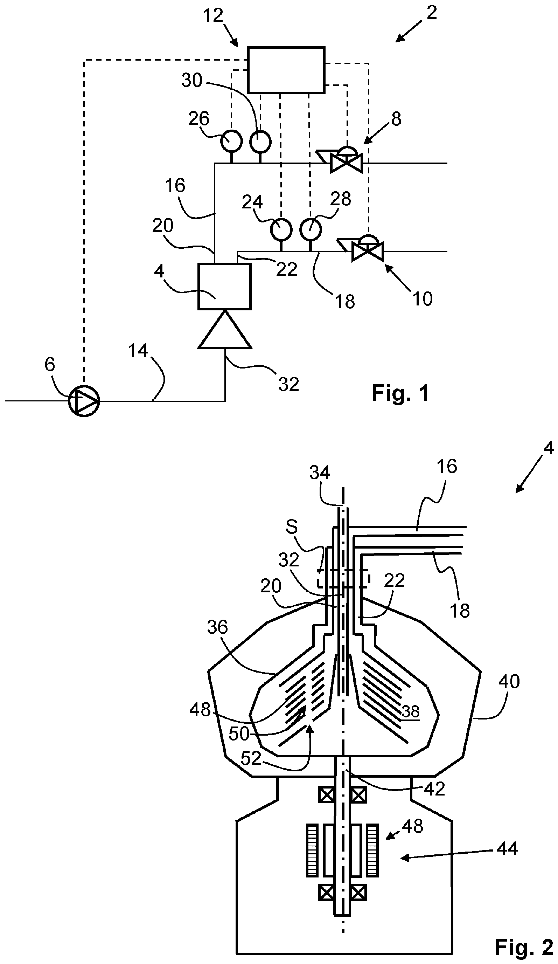

**Fig. 1** schematically illustrates a centrifugal separation system 2.

The centrifugal separation system 2 comprises a centrifugal separator 4 configured to separate a liquid-liquid mixture i.e., a feed mixture, into a liquid heavy phase and a liquid light phase. An example of the centrifugal separator 4 is discussed below with reference to **Fig. 2****.**

The centrifugal separation system 2 further comprises: a feed pump 6, a light phase backpressure valve 8, a heavy phase backpressure valve 10, and a control arrangement 12.

During use of the centrifugal separation system 2, the feed pump 6 is configured to pump the feed mixture via an inlet conduit 14 into the centrifugal separator 4. The light phase backpressure valve 8 is configured to control a pressure in a light phase outlet conduit 16 leading from a light phase outlet 20 of the centrifugal separator 4. The heavy phase backpressure valve 10 is configured to control a pressure in a heavy phase outlet conduit 18 leading from a heavy phase outlet 22 of the centrifugal separator 4.

Backpressure valves as such are known and are configured for maintaining a defined pressure upstream of the relevant valve. For instance, a so-called CPM, constant pressure modulating, valve can be used as a backpressure valve.

A pressure setpoint of a backpressure valve may be adjustable.

The control arrangement 12 comprises a heavy phase pressure sensor 24, a light phase pressure sensor 26, and a heavy phase flowrate sensor 28. Additionally, or alternatively to the heavy phase flowrate sensor 28, the control arrangement 12 may comprise a light phase flowrate sensor 30.

During use of the centrifugal separation system 2, the heavy phase pressure sensor 24 provides data related to a pressure in the heavy phase outlet conduit 18 and at the heavy phase outlet 22. The light phase pressure sensor 26 provides data related to a pressure in the light phase outlet conduit 16 and at the light phase outlet 20. The heavy phase flowrate sensor 28 provides data related to a flowrate of the heavy phase in the heavy phase outlet conduit 18. The light phase flowrate sensor 30 provides data related to a flowrate of the light phase in the light phase outlet conduit 16. If only one of the heavy phase flowrate sensor 28 and the light phase flowrate sensor 30 is provided, the flowrate of the other phase can be calculated if the flowrate of the feed mixture is known.

The flowrate of the feed mixture can be measured with a flowrate sensor. Alternatively, or additionally a feed pump of the constant displacement type driven at known one or more known rotational speeds will pump the feed mixture at a known flowrate through the inlet conduit 14 to an inlet 32 of the centrifugal separator 4.

Accordingly, the feed pump 6 may comprise a constant displacement pump, such as a progressive cavity pump. In this manner, the flowrate of the liquid-liquid mixture may be known if the rotational speed of the feed pump 6 is known.

Moreover, according to some embodiments, the rotational speed of the feed pump 6 can be controlled by the control arrangement 12 and/or a VFD, variable frequency drive, which receives pump control signals from the control arrangement 12. Thus, the flowrate of the feed mixture can be controlled.

Fig. 2 schematically illustrates a centrifugal separator 4. The centrifugal separator 4 is shown in a section along a rotational axis 34 of a rotor 36 of the centrifugal separator 4.

The centrifugal separator 4 is an example of a centrifugal separator 4 configured for use in a centrifugal separation system 2 as discussed above with reference to **Fig. 1****.** Accordingly, in the following reference is also made to **Fig. 1****.**

The centrifugal separator 4 comprises a rotor 36, an inlet 32 for the liquid-liquid mixture, a heavy phase outlet 22 for the liquid heavy phase, and a light phase outlet 20 for the liquid light phase.

The rotor 36 delimits a separation space 38. The inlet 32 leads to the separation space 38, the heavy phase outlet 22 leads from the separation space 38, and the light phase outlet 20 leads from the separation space 38.

Each of the inlet 32, the heavy phase outlet 22, and the light phase outlet 20 is mechanically hermetically sealed, as schematically indicated by the broken line box S in **Fig. 2****.** Suitable mechanical hermetical seals are known.

The rotor 36 is arranged within a stationary housing 40 of the centrifugal separator 4. A spindle 42 connects the rotor 36 with a drive arrangement 44. The rotor 36 is supported and driven by the spindle 46. The drive arrangement 44 drives the spindle 46 and the rotor 36 about the rotational axis 34. The drive arrangement 44 may comprise an electric motor 48.

In the illustrated embodiments, the spindle 46 is directly driven by the electric motor 48. In alternative embodiments, a transmission may be arranged between the electric motor and the spindle.

A separation aid, such as a disc stack of frustoconical separation discs 48, is arranged in the separation space 38 in the rotor 36.

The separation discs 48 are provided with distribution holes 50 forming a number of rising channels 52 through the disc stack. In **Fig. 2** only one of these rising channels 52 is shown.

During separation of the feed mixture in the separation space 38 of the rotor 36, the fluid feed mixture is lead via the inlet 32 to the centre of the rotor 36. Via the rising channels 52, the feed mixture is distributed in an axial direction within the separation space 38.

Rotation of the rotor 36 and the disc stack, causes the fluid feed mixture to separate into the light phase and the heavy phase. The separated light phase flows radially inwardly between the separation discs 48 towards the rotational axis 34 and out of the rotor 36 via the light phase outlet 20. The separated heavy phase flows radially outwardly between the separation discs 42 towards a periphery of the separation space 38 and out of the rotor 36 via the heavy phase outlet 22.

According to some embodiments, such as the illustrated embodiments, the centrifugal separator 4 comprises a disc stack of frustoconical separation discs 48 arranged in the separation space 38. The separation discs 48 are provided with distribution holes 50 forming at least one rising channel 52 through the disc stack. The distribution holes 50 are arranged closer to an inner periphery of the separation discs 48 than an outer periphery of the separation discs 48. That is, the distribution holes 50 are arranged radially closer to an inner periphery than to an outer periphery of the separation discs 48.

Thus, a centrifugal separator 4 of the so-called concentrator type is provided.

Thus, according to the illustrated embodiments, the centrifugal separation system 2 may be configured for use aboard a marine vessel, wherein the liquid-liquid mixture is bilgewater, the liquid heavy phase is water, and the liquid light phase is oil. In this manner, clean water i.e., a clean heavy phase is produced by the centrifugal separation system 2. Suitably, of such cleanliness that the water fulfils requirements for being dumped overboard the marine vessel.

Moreover, this is achieved with only small amounts of water in the light phase i.e., the oil containing phase. Accordingly, a sludge tank aboard the marine vessel is not unnecessarily filled with water.

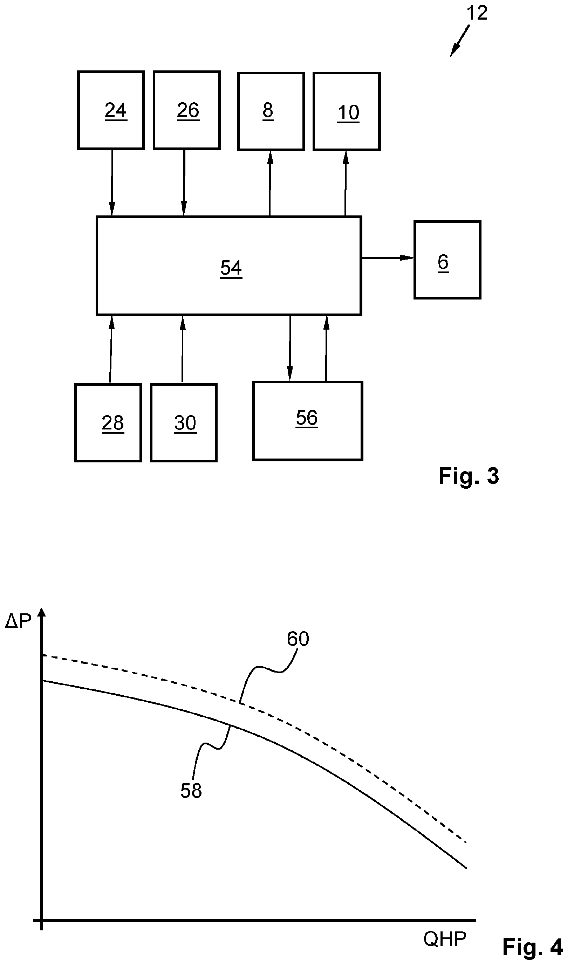

**Fig. 3** schematically illustrates a control arrangement 12 of a centrifugal separation system, such as of the centrifugal separation system 2 discussed with reference to **Figs. 1 and 2** above. Accordingly, in the following, reference is also made to **Figs. 1 and 2****.**

The control arrangement 12 comprises at least one calculation unit 54, which may take the form of substantially any suitable type of processor circuit or microcomputer, e.g. a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The herein utilised expression "calculation unit" may represent a processing circuitry comprising a plurality of processing circuits, such as, e.g., any, some or all of the ones mentioned above.

The control arrangement 12 comprises a memory unit 56. The calculation unit 54 is connected to the memory unit 56, which provides the calculation unit 54 with, e.g. stored programme code, data tables, and/or other stored data which the calculation unit 54 needs to enable it to do calculations and to control the centrifugal separation system 2. The calculation unit 54 is also adapted to store partial or final results of calculations in the memory unit 56. The memory unit 56 may comprise a physical device utilised to store data or programs, i.e. sequences of instructions on a temporary or permanent basis. According to some embodiments, the memory unit 56 may comprise integrated circuits comprising silicon-based transistors. The memory unit 56 may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

In a known manner, the control arrangement 12 is further provided with respective devices (not shown) for receiving and/or sending input and output signals. These input and output signals may comprise waveforms, pulses or other attributes, which can be detect as information by signal receiving devices connected to the calculation unit 54, and which can convert signals from signal sending devices to signals processable by the calculation unit 54. Each of the connections to the respective devices for receiving and sending input and output signals may take the form of one or more from among a cable, a data bus, e.g. a CAN (controller area network) bus, a MOST (media orientated systems transport) bus or some other bus configuration, or a wireless connection.

In the embodiment depicted, only one calculation unit 54 and memory unit 56 are shown, but the control arrangement 12 may alternatively comprise more than one calculation unit and/or memory unit.

Mentioned as examples, the output signal sending devices may send control signals to one or more of the backpressure valves 8, 10 and the feed pump 6. The input signal receiving devices may receive signals from one or more of the pressure sensors 24, 26 and the flowrate sensors 28, 30.

Examples of a data table may be e.g., a table containing the control function. Examples of data may be measured, monitored, and/or calculated data related to pressures, pressure differences, and flowrates.

The control arrangement 12 is connected to various sensors and valves in order to receive input and provide output for performing the various aspects and embodiments of the method discussed herein. Various sensors and valves are exemplified above.

The control arrangement 12 is configured to:
- Determine a pressure of the liquid heavy phase. For this purpose, the heavy phase pressure sensor 24 may provide measurement data to the calculation unit 54. Based on these measurement data, the calculation unit 54 can determine the pressure of the heavy phase.
- Determine a pressure of the liquid light phase. For this purpose, the light phase pressure sensor 26 may provide measurement data to the calculation unit 54. Based on these measurement data, the calculation unit 54 can determine the pressure of the light phase.
- Determine a flowrate of the liquid heavy phase and/or a flowrate of the liquid light phase. For this purpose, the heavy phase flowrate sensor 28 and/or the light phase flowrate sensor 30 may provide measurement data to the calculation unit 54. Based on these measurement data, the calculation unit 54 can determine the flowrate of the heavy phase and/or the light phase.
- Provide a control function, that links a pressure difference between the liquid heavy phase and the liquid light phase with the flowrate of the liquid heavy phase or with the flowrate of the liquid light phase. The control function may be provided as a data table or as an equation. See further below with reference to **Fig. 4****.**
- Control a backpressure of the liquid heavy phase and/or a backpressure of the liquid light phase in order to adjust the pressure difference between the liquid heavy phase and the liquid light phase to the flowrate of the liquid heavy phase or the flowrate of the liquid light phase based on the control function. For this purpose, the calculation unit 54 may control a setpoint of the heavy phase backpressure valve 10 and/or of the light phase backpressure valve 8.

Since the flowrates of heavy and light phases depend on the composition of the feed mixture, by controlling the pressure difference between the liquid heavy phase and the liquid light phase based on at least one of the heavy and light phase flowrates, the control arrangement 12 provides for a control of the separation process in the centrifugal separator 4 that is configured to follow variations in the composition of the feed mixture.

According to some embodiments, the control arrangement 2 may be configured to:
- determine a flowrate of the liquid heavy phase, and
- provide a control function, that links a pressure difference between the liquid heavy phase and the liquid light phase with the flowrate of the liquid heavy phase. In this manner, the control function may be specifically linked to the flowrate of the liquid heavy phase.

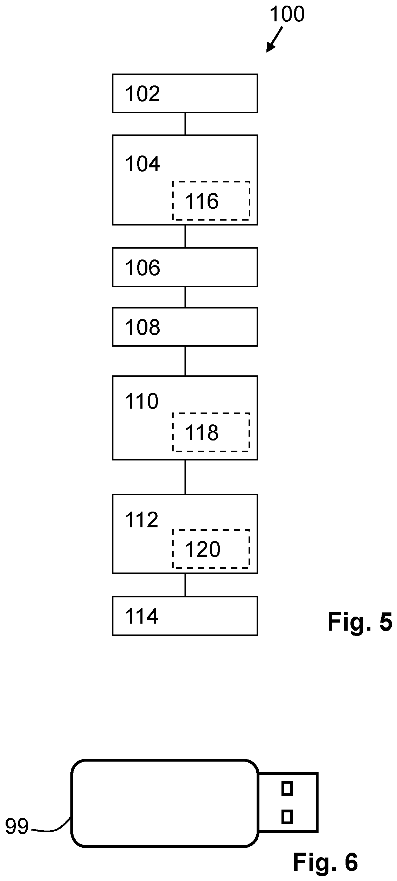

The control arrangement 12 is configured to perform a method 100 according to any one of aspects and/or embodiments discussed herein, see e.g. below with reference to **Fig. 5****.**

**Fig. 4** shows a diagram of a control function 58 to be applied in the control arrangement of the herein discussed centrifugal separation system 2. Accordingly, in the following reference is also made to the above discussion of **Figs. 1-3****.**

The control function 58 is represented by a curve in **Fig. 4****.** In the control arrangement 12, the control function 58 may be represented by an equation or a data table.

As discussed above, the control function 58 links a pressure difference ΔP between the liquid heavy phase and the liquid light phase with the flowrate of the liquid heavy phase QHP or with the flowrate of the liquid light phase. In the control function 58 of **Fig. 4****,** the pressure difference ΔP between the liquid heavy phase and the liquid light phase is linked with the flowrate of the liquid heavy phase QHP.

In **Fig. 4****,** a further function 60 represents a calibration curve for a particular model of centrifugal separator. The further function 60 represents a maximum pressure difference between the liquid heavy phase and the liquid light phase at different flowrates of the liquid heavy phase. The maximum pressure difference is at a limit before liquid heavy phase leaks into the liquid light phase. That is, should the pressure difference be higher than this maximum pressure difference, then amounts of liquid heavy phase would leak into the light phase outlet.

The further function 60 can be established by measuring this maximum pressure difference in a laboratory setting. Pressure drop calculations of the centrifugal separator 4, between the inlet 32 and the heavy phase outlet 22 and/or between the inlet 32 and the light phase outlet 20 may complement the measurements to establish the further function 60.

As shown in **Fig. 4****,** the control function 58, that links the pressure difference between the liquid heavy phase and the liquid light phase with the flowrate of the liquid heavy phase, is provided below the mapped relationship, represented by the further function 60.

Thus, the control function 58 is provided at a safety margin that ensures a stable control of the centrifugal separation system 2. Namely, the safety margin ensures that heavy phase does not escape via the light phase outlet 20, which would negatively affect the measured heavy phase flowrate on which the control of the pressure difference is based.

For instance, the control function 58 may be provided at fixed pressure difference below the further function 60, such as e.g., 20 kPa below the further function 60.

Accordingly, the control function 58 provides for operating scenarios of the centrifugal separation system 2 wherein the light and heavy phase proportions of the liquid-liquid mixture fed to the centrifugal separator 4 varies to a large extent. Variations as large as between 0 - 100 % of the respective phases in the liquid-liquid mixture can be handled by the centrifugal separation system 2.

In practice, the flowrate of the heavy phase is measured and/or calculated and the pressure difference between the heavy phase and the light phase is adjusted in accordance with the control function 58.

More specifically, the flowrates of the light and heavy phases that have been separated in the centrifugal separator 4 are determined by the heavy phase and light phase contents of the feed mixture. If the liquid-liquid mixture e.g., contains large amounts of heavy phase and small amounts of light phase, large amounts of the heavy phase are separated and small amounts of the light phase are separated i.e., the heavy phase flowrate is high and the light phase flowrate is low. A position of a separation interface between the heavy phase and the light phase within the separation space 38 is determined by the pressures of the light and heavy phase backpressure valves 8, 10. In the present example, based on the heavy phase flowrate, QHP, the setpoint of the heavy phase backpressure valve 10 and/or of the light phase backpressure valve 8 is/are adjusted such that the pressure difference between the heavy phase and the light phase is in accordance with the control function 58. Thus, the separation interface will be maintained within a desired radial positional range within the separation space 38 to ensure a reliable separation process in the centrifugal separation system 2.

As discussed herein, the pressure difference between the liquid heavy phase and the liquid light phase may alternatively be linked with the flowrate of the liquid light phase. In such case, the control function may be provided below a mapped relationship between a maximum pressure difference between the liquid heavy phase and the liquid light phase and the flowrate of the liquid light phase. Again, the maximum pressure difference is at a limit before liquid heavy phase leaks into the liquid light phase. In practice, such a mapped relationship may have an inclination opposite to that of the further function 60 shown in **Fig. 4****.**

**Fig. 5** illustrates a method 100 for controlling a separation process in a centrifugal separator configured to separate a liquid-liquid mixture into a liquid heavy phase and a liquid light phase.

The centrifugal separator may be a centrifugal separator 4 of a centrifugal separation system 2 discussed above. Accordingly, in the following reference is also made to **Figs. 1-4****.**

Again, the centrifugal separator 4 comprises a rotor 36 delimiting a separation space 38, an inlet 32 for the liquid-liquid mixture leading to the separation space 38, a heavy phase outlet 22 for the liquid heavy phase leading from the separation space 38, and a light phase outlet 20 for the liquid light phase leading from the separation space 38. Each of the inlet 32, the heavy phase outlet 22, and the light phase outlet 20 is mechanically hermetically sealed.

The method 100 comprises steps of:
- rotating 102 the rotor 36,
- supplying 104 a feed of the liquid-liquid mixture to the inlet 32,
- determining 106 a pressure of the liquid heavy phase,
- determining 108 a pressure of the liquid light phase,
- determining 110 a flowrate of the liquid heavy phase and/or a flowrate of the liquid light phase,
- providing 112 a control function 58, that links a pressure difference between the liquid heavy phase and the liquid light phase with the flowrate of the liquid heavy phase or with the flowrate of the liquid light phase, and
- controlling 114 a backpressure of the liquid heavy phase and/or a backpressure of the liquid light phase in order to adjust the pressure difference between the liquid heavy phase and the liquid light phase to the flowrate of the liquid heavy phase or the flowrate of the liquid light phase based on the control function 58.

According to embodiments, the control function 58, that links the pressure difference between the liquid heavy phase and the liquid light phase with the flowrate of the liquid heavy phase or with the flowrate of the liquid light phase, may be provided below a mapped relationship between a maximum pressure difference between the liquid heavy phase and the liquid light phase and the flowrate of the liquid heavy phase or the flowrate of the liquid light phase, wherein the maximum pressure difference is at a limit before liquid heavy phase leaks into the liquid light phase.

According to embodiments, the step of supplying 104 the feed of liquid-liquid mixture to the inlet may comprise a step of:
- feeding 116 the liquid-liquid mixture with a constant displacement pump, such as a progressive cavity pump, to the inlet 32.

According to embodiments, the centrifugal separator 4 may comprise a disc stack of frustoconical separation discs 48 arranged in the separation space 38, the separation discs 48 being provided with distribution holes 50 forming a rising channel 52 through the disc stack, the distribution holes 50 being arranged closer to an inner periphery of the separation discs 48 than an outer periphery of the separation discs 48.

According to embodiments, the liquid-liquid mixture may be bilgewater, the liquid heavy phase may be water, and the liquid light phase may be oil.

According to alternative embodiments, the liquid-liquid mixture may be one or more other kinds of oil-containing water mixtures, such as deck drains of an oil production platform or produced water i.e., a byproduct during the extraction of oil and/or natural gas from drillholes. Separated in accordance with the present method and/or in the present centrifugal separation system, the separated water from the deck drains can be dumped overboard the platform and the separated water from produced water can be pumped back underground. According to embodiments, the step of determining 110 the flowrate of the liquid heavy phase and/or a flowrate of the liquid light phase may comprise a step of: determining 118 the flowrate of the liquid heavy phase, and
the step of providing 112 the control function 58, that links the pressure difference between the liquid heavy phase and the liquid light phase with the flowrate of the liquid heavy phase or with the flowrate of the liquid light phase may comprise a step of: providing 120 a control function 58, that links the pressure difference between the liquid heavy phase and the liquid light phase with the flowrate of the liquid heavy phase.

According to a further aspect, there is provided a computer program comprising instructions which, when the program is executed by a computer, causes the computer to carry out a method 100 according to any one of aspects and/or embodiments discussed herein.

One skilled in the art will appreciate that the method 100 for controlling a separation process in a centrifugal separator configured to separate a liquid-liquid mixture into a liquid heavy phase and a liquid light phase may be implemented by programmed instructions. These programmed instructions are typically constituted by a computer program, which, when it is executed in a computer or calculation unit 54, ensures that the computer or calculation unit 54 carries out the desired control, such as the method steps 102 - 120 according to the invention. The computer program is usually part of a computer-readable storage medium which comprises a suitable digital storage medium on which the computer program is stored.

**Fig. 6** illustrates embodiments of a computer-readable storage medium 99 comprising instructions which, when executed by a computer or calculation unit 54, cause the computer or calculation unit 54 to carry out the steps of the method 100 according to any one of aspects and/or embodiments discussed herein.

The computer-readable storage medium 99 may be provided for instance in the form of a data carrier carrying computer program code for performing at least some of the steps 102 - 120 according to some embodiments when being loaded into the one or more calculation units 54. The data carrier may be, e.g. a ROM (read-only memory), a PROM (programable read-only memory), an EPROM (erasable PROM), a flash memory, an EEPROM (electrically erasable PROM), a hard disc, a CD ROM disc, a memory stick, an optical storage device, a magnetic storage device or any other appropriate medium such as a disk or tape that may hold machine readable data in a non-transitory manner. The computer-readable storage medium may furthermore be provided as computer program code on a server and may be downloaded to the calculation unit 54 remotely, e.g., over an Internet or an intranet connection, or via other wired or wireless communication systems.

The computer-readable storage medium 99 shown in **Fig. 6** is a nonlimiting example in the form of a USB memory stick.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the invention, as defined by the appended claims.

## Claims

1. A method (100) for controlling a separation process in a centrifugal separator (4) configured to separate a liquid-liquid mixture into a liquid heavy phase and a liquid light phase, wherein the centrifugal separator (4) comprises a rotor (36) delimiting a separation space (38), an inlet (32) for the liquid-liquid mixture leading to the separation space (38), a heavy phase outlet (22) for the liquid heavy phase leading from the separation space (38), and a light phase outlet (20) for the liquid light phase leading from the separation space (38), wherein each of the inlet (32), the heavy phase outlet (22), and the light phase outlet (20) is mechanically hermetically sealed, and wherein the method (100) comprises steps of:
- rotating (102) the rotor (36),
- supplying (104) a feed of the liquid-liquid mixture to the inlet (32),
- determining (106) a pressure of the liquid heavy phase,
- determining (108) a pressure of the liquid light phase,
- determining (110) a flowrate of the liquid heavy phase and/or a flowrate of the liquid light phase,
- providing (112) a control function (58), that links a pressure difference between the liquid heavy phase and the liquid light phase with the flowrate of the liquid heavy phase or with the flowrate of the liquid light phase, and
- controlling (114) a backpressure of the liquid heavy phase and/or a backpressure of the liquid light phase in order to adjust the pressure difference between the liquid heavy phase and the liquid light phase to the flowrate of the liquid heavy phase or the flowrate of the liquid light phase based on the control function (58).

2. The method (100) according to claim 1, wherein the control function (58), that links the pressure difference between the liquid heavy phase and the liquid light phase with the flowrate of the liquid heavy phase or with the flowrate of the liquid light phase, is provided below a mapped relationship between a maximum pressure difference between the liquid heavy phase and the liquid light phase and the flowrate of the liquid heavy phase or the flowrate of the liquid light phase, wherein the maximum pressure difference is at a limit before liquid heavy phase leaks into the liquid light phase.

3. The method (100) according to claim 1 or 2, wherein the step of supplying (104) the feed of liquid-liquid mixture to the inlet (32) comprises a step of:
- feeding (116) the liquid-liquid mixture with a constant displacement pump, such as a progressive cavity pump, to the inlet (32).

4. The method (100) according to claim according to any one of the preceding claims, wherein the centrifugal separator (4) comprises a disc stack of frustoconical separation discs (48) arranged in the separation space (38), the separation discs (48) being provided with distribution holes (50) forming a rising channel (52) through the disc stack, the distribution holes (50) being arranged closer to an inner periphery of the separation discs (48) than an outer periphery of the separation discs (48).

5. The method (100) according to any one of the preceding claims, wherein the liquid-liquid mixture is bilgewater, the liquid heavy phase is water, and the liquid light phase is oil.

6. The method (100) according to any one of the preceding claims, wherein in the step of determining (110) the flowrate of the liquid heavy phase and/or a flowrate of the liquid light phase comprises a step of: determining (118) the flowrate of the liquid heavy phase, and wherein
the step of providing (112) the control function (58), that links the pressure difference between the liquid heavy phase and the liquid light phase with the flowrate of the liquid heavy phase or with the flowrate of the liquid light phase comprises a step of: providing (120) a control function (58), that links the pressure difference between the liquid heavy phase and the liquid light phase with the flowrate of the liquid heavy phase.

7. A centrifugal separation system (2) comprising a centrifugal separator (4) configured to separate a liquid-liquid mixture into a liquid heavy phase and a liquid light phase, wherein the centrifugal separator (4) comprises:
a rotor (36) delimiting a separation space (38), an inlet (32) for the liquid-liquid mixture leading to the separation space (38), a heavy phase outlet (22) for the liquid heavy phase leading from the separation space (38), and a light phase outlet (20) for the liquid light phase leading from the separation space (38), wherein each of the inlet (32), the heavy phase outlet (22), and the light phase outlet (20) is mechanically hermetically sealed, wherein the centrifugal separation system (2) further comprises:
a feed pump (6), a light phase backpressure valve (8), a heavy phase backpressure valve (10), and a control arrangement (12), wherein the control arrangement (12) comprises:
a heavy phase pressure sensor (24), a light phase pressure sensor (26), a heavy phase flowrate sensor (28) and/or a light phase flowrate sensor (30), and wherein the control arrangement (12) is configured to:
- determine a pressure of the liquid heavy phase,
- determine a pressure of the liquid light phase,
- determine a flowrate of the liquid heavy phase and/or a flowrate of the liquid light phase,
- provide a control function (58), that links a pressure difference between the liquid heavy phase and the liquid light phase with the flowrate of the liquid heavy phase or with the flowrate of the liquid light phase, and
- control a backpressure of the liquid heavy phase and/or a backpressure of the liquid light phase in order to adjust the pressure difference between the liquid heavy phase and the liquid light phase to the flowrate of the liquid heavy phase or the flowrate of the liquid light phase based on the control function (58).

8. The centrifugal separation system (2) according to claim 7, wherein the control function (58), that links the pressure difference between the liquid heavy phase and the liquid light phase with the flowrate of the liquid heavy phase or with the flowrate of the liquid light phase, is provided below a mapped relationship between a maximum pressure difference between the liquid heavy phase and the liquid light phase and the flowrate of the liquid heavy phase or the flowrate of the liquid light phase, wherein the maximum pressure difference is at a limit before liquid heavy phase leaks into the liquid light phase.

9. The centrifugal separation system (2) according to claim 7 or 8, wherein the feed pump (6) comprises a constant displacement pump, such as a progressive cavity pump.

10. The centrifugal separation system (2) according to any one of claims 7 - 9, wherein the centrifugal separator (4) comprises a disc stack of frustoconical separation discs (48) arranged in the separation space (38), the separation discs (48) being provided with distribution holes (50) forming a rising channel (52) through the disc stack, the distribution holes (50) being arranged closer to an inner periphery of the separation discs (48) than an outer periphery of the separation discs (48).

11. The centrifugal separation system (2) according to any one of claims 7 - 10, being configured for use aboard a marine vessel, wherein the liquid-liquid mixture is bilgewater, the liquid heavy phase is water, and the liquid light phase is oil.

12. The centrifugal separation system (2) according to any one of claims 7 - 11, wherein the control arrangement (12) is configured to:
- determine a flowrate of the liquid heavy phase, and
- provide a control function (58), that links a pressure difference between the liquid heavy phase and the liquid light phase with the flowrate of the liquid heavy phase.
